**Europäisches Patentamt**

**European Patent Office**

**Office européen des brevets**

(19)

(11) Veröffentlichungsnummer: **0 050 360**
**B1**

(12) **EUROPÄISCHE PATENTSCHRIFT**

(45) Veröffentlichungstag der Patentschrift:
**03.10.84**

(51) Int. Cl.³: **H 01 B 3/46**, C 08 L 83/04

(21) Anmeldenummer: **81108534.9**

(22) Anmeldetag: **20.10.81**

(54) Bestandteil von elektrischen Vorrichtungen.

(30) Priorität: **21.10.80 DE 3039737**

(43) Veröffentlichungstag der Anmeldung:
**28.04.82 Patentblatt 82/17**

(45) Bekanntmachung des Hinweises auf die Patenterteilung:
**03.10.84 Patentblatt 84/40**

(84) Benannte Vertragsstaaten:
**DE FR GB SE**

(56) Entgegenhaltungen:
**DE - A - 2 457 446**
**DE - B - 1 075 829**
**US - A - 3 108 985**

(73) Patentinhaber: **WACKER-CHEMIE GMBH,
Prinzregentenstrasse 22, D-8000 München 22 (DE)**

(72) Erfinder: **Göttig, Hans-Jürgen, Ing. Grad., Grafstrasse 4,
D-8025 Unterhaching (DE)**
Erfinder: **Höhl, Horst, Pfaffenwinkel 28,
D-8000 München 70 (DE)**
Erfinder: **Matejcek, Klaus, Dr., Dipl.-Chem.,
Hansjakobstrasse 117a, D-8000 München 82 (DE)**

ACTORUM AG

## Beschreibung

Organopolysiloxanelastomer mit einem Gehalt an wärmeleitender Metallverbindung als wärmeleitender und elektrisch isolierender Bestandteil von elektrischen Vorrichtungen ist bekannt. Hierzu wird verwiesen auf z.B. DE-A-2 641 894, offengelegt 24. März 1977, N.V. Philips' Gloeilampenfabrieken. Als Beispiele für wärmeleitende Metallverbindungen werden in dieser Druckschrift Aluminiumoxid, Magnesiumoxid, Bornitrid und «Zirkonsilikat» genannt.

Weiterhin ist bekannt, dass Organopolysiloxanelastomer, das z.B. Siliciumcarbid enthält, das zumindest vor der Vernetzung vom Organopolysiloxan zum Elastomer z.B. SiC-gebundene Vinylgruppen aufweist, weil es z.B. mit einem Vinylsilan vorbehandelt wurde, verbesserte Griffigkeit aufweist. Hierzu wird verwiesen auf DE-A-2 457 446, offengelegt 10. Juni 1976, Metzeler Kautschuk AG.

Die Organopolysiloxane gemäss US-A-3 108 985 enthalten höchstens 1,5 organische Reste je Si-Atom. Sie werden deshalb bei der Vernetzung sehr stark vernetzt und ergeben keine Elastomere (vgl. z.B. Gmelins Handbuch der anorganischen Chemie, 8. Auflage, Silicium, Teil C, Weinheim 1958, Seite 470, vorletzter Absatz). Ausserdem ist US-A-3 108 958 nicht zu entnehmen, dass ein Gehalt an Siliciumcarbid den Organopolysiloxanen Wärmeleitfähigkeit verleiht.

Gegenstand der Erfindung ist Organopolysiloxanelastomer als wärmeleitender und elektrisch isolierender Bestandteil von elektrischen Vorrichtungen, dadurch gekennzeichnet, dass es Siliciumcarbid, das vor der Vernetzung auf seiner Oberfläche Organosilylgruppen aufweist, in Mengen von 20 bis 150 Gewichtsprozent, bezogen auf das Gesamtgewicht der übrigen Bestandteile des Elastomeren, enthält.

Es wurde nämlich gefunden, dass Siliciumcarbid, das auf seiner Oberfläche Organosilylgruppen aufweist, Organopolysiloxanelastomeren eine bessere Wärmeleitfähigkeit verleiht als unbehandeltes Siliciumcarbid.

Siliciumcarbid, das auf seiner Oberfläche Organosilylgruppen aufweist, kann durch Behandlung von Siliciumcarbid mit Organosiliciumverbindungen hergestellt werden. Das bei dieser Behandlung eingesetzte Siliciumcarbid hat vorzugsweise eine Teilchengrösse von 0,001 bis 1 mm. Soll die Mischung aus zum Elastomeren vernetzendem Organopolysiloxan und Siliciumcarbid, das auf seiner Oberfläche Organosilylgruppen aufweist, vor der Vernetzung zum Elastomer fliessfähig sein, so hat das für die Behandlung eingesetzte Siliciumcarbid vorzugsweise eine Teilchengrösse von 0,001 bis 0,5 mm.

Für die Behandlung von Siliciumcarbid mit Organosiliciumverbindung, um Siliciumcarbid, das auf seiner Oberfläche Organosilylgruppen aufweist, herzustellen, können beliebige Organosiliciumverbindungen eingesetzt werden, mit denen auch bisher anorganische feste Stoffe mit einer Teilchengrösse von höchstens 1 mm behandelt werden konnten. Bevorzugt sind Silane bzw. Silazane, die mindestens eine SiC-gebundene Vinylgruppe je Si-Atom aufweisen, so dass das Siliciumcarbid zumindest vor der Vernetzung vom Organopolysiloxan zum Elastomer Si-gebundene Vinylgruppen aufweist. Einzelne Beispiele für derartige Organosiliciumverbindung sind Vinyltriethoxysilan, Vinyltris-(methoxyethylenoxy)-silan, Vinyltriacetoxysilan, Tetramethyldivinyldisilazan, Vinyldimethylchlorsilan, Vinylmethyldichlorsilan und Vinyltrichlorsilan.

Weitere Beispiele für Organosiliciumverbindungen, mit denen Siliciumcarbid behandelt werden kann, um Siliciumcarbid, das auf seiner Oberfläche Organosilylgruppen aufweist, zu erzeugen, sind Trimethylethoxysilan und Hexamethyldisilazan.

Die Behandlung von Siliciumcarbid mit Organosiliciumverbindung kann vor dem Vermischen mit zum Elastomer zu vernetzendem Organopolysiloxan oder im zum Elastomer zu vernetzendem Organopolysiloxan jeweils ohne oder mit Mitverwendung von Wasser erfolgen.

Die übrigen Bestandteile des Elastomeren können ausser dem selbstverständlich stets vorliegenden Organopolysiloxan z.B. Füllstoffe bzw. Pigmente, wie Quarzmehl, Eisenoxid oder pyrogen erzeugtes Siliciumdioxid, sein.

Die anderen Bestandteile der erfindungsgemässen Elastomeren bzw. der zu ihrer Herstellung verwendeten Massen als Siliciumcarbid, das auf seiner Oberfläche Organosilylgruppen aufweist, können die gleichen sein wie die Bestandteile der bisher bekannten Organopolysiloxanelastomeren bzw. der zu ihrer Herstellung verwendeten Massen. Deshalb wird hier auf eine eingehende Aufzählung verzichtet.

Die Vernetzung der zum Elastomer vernetzbaren Massen auf Grundlage von Organopolysiloxan und Siliciumcarbid, das auf seiner Oberfläche Organosilylgruppen aufweist, kann auf beliebige Weise, z.B. durch Anlagerung von Si-gebundenem Wasserstoff an SiC-gebundene Vinylgruppen, organische peroxidische Verbindungen, wie Dicumylperoxid, Hochenergiestrahlen oder Kondensation, erfolgt sein.

Bei den elektrischen Vorrichtungen, in denen erfindungsgemässes Organopolysiloxanelastomer als wärmeleitender und elektrisch isolierender Bestandteil vorliegt, kann es sich z.B. um Akkumulatoren, elektrische Heizelemente, Lasthebemagnete oder elektromagnetische Bremsen handeln, worin das Elastomer vor der Vernetzung jeweils als Vorgussmasse vorliegt, oder um Transistoren handeln, bei denen solches Elastomer eine wärmeleitende und elektrisch isolierende Unterlage bildet.

Die folgenden Beispiele beweisen, dass Siliciumcarbid, das auf seiner Oberfläche Organosilylgruppen aufweist, Organopolysiloxanelastomeren eine bessere Wärmeleitfähigkeit verleiht als unbehandeltes Siliciumcarbid und damit Organopolysiloxanelastomer, das solches behandeltes Siliciumcarbid enthält, als wärmeleitenden und elektrisch isolierenden Bestandteil von elektrischen Vorrichtungen geeignet macht. Alle Angaben von Teilen und Prozentsätzen beziehen sich jeweils auf das Gewicht.

*Beispiel 1*

44 Teile eines Vinyldimethylsiloxaneinheiten als endständige Einheiten aufweisenden Dimethylpolysiloxans mit einer Viskosität von 1000 mPa · s bei 23°C werden mit 53 Teilen Quarzmehl, 2 Teilen Eisenoxid, 0,1 Teilen eines von nachweisbarem anorganischen Halogen freien, aus $H_2PtCl_6 \cdot 6H_2O$ und Tetramethyldivinyldisiloxan hergestellten, als Katalysator für die Anlagerung von Si-gebundenem Wasserstoff an aliphatische Mehrfachbindung bekannten Katalysators und 30 Teilen Siliciumcarbid mit einer Teilchengrösse von 0,1 bis 0,2 mm, das auf seiner Oberfläche SiC-gebundene Vinylgruppen aufweist, vermischt.

9 Teile der so erhaltenen Mischung werden mit 1 Teil eines Mischpolymerisats aus Dimethylsiloxan-, Methylhydrogensiloxan- und Trimethylsiloxaneinheiten mit einer Viskosität von 730 mPa · s bei 23°C und 0,12 Gewichtsprozent Si-gebundenem Wasserstoff vermischt. Die so erhaltene Masse wird bei Raumtemperatur zum Elastomeren vernetzen gelassen. Nach 3 Tagen beträgt die Wärmeleitfähigkeit des so erhaltenen Organopolysiloxanelastomeren 0,74 W/mK.

Das in diesem Beispiel verwendete Siliciumcarbid, das auf seiner Oberfläche SiC-gebundene Vinylgruppen aufweist, wurde durch Vermischen von 100 Teilen des eine Teilchengrösse von 0,1 bis 0,2 mm aufweisenden Siliciumcarbids mit 1,5 Teilen einer 5prozentigen wässrigen Lösung von Vinyltriethoxysilan, Trocknen des so erhaltenen Gemisches während 2 Stunden bei 105°C und Absieben von Agglomeraten mit einer Teilchengrösse von über 0,5 mm hergestellt.

*Vergleichsversuch a)*

Die in Beispiel 1 beschriebene Arbeitsweise wird wiederholt mit der Abänderung, dass anstelle der 30 Teile Siliciumcarbid mit einer Teilchengrösse von 0,1 bis 0,2 mm, das auf seiner Oberfläche SiC-gebundene Vinylgruppen aufweist, 30 Teile Siliciumcarbid mit einer Teilchengrösse von 0,1 bis 0,2 mm, das nicht vorbehandelt war, eingesetzt werden. Nach 3 Tagen beträgt die Wärmeleitfähigkeit des so erhaltenen Organopolysiloxanelastomeren 0,56 W/mK.

*Beispiel 2*

Die in Beispiel 1 beschriebene Arbeitsweise wird wiederholt mit der Abänderung, dass anstelle der 30 Teile Siliciumcarbid mit einer Teilchengrösse von 0,1 bis 0,2 mm, das auf seiner Oberfläche SiC-gebundene Vinylgruppen aufweist, 60 Teile des gleichen Siliciumcarbids mit SiC-gebundenen Vinylgruppen auf der Oberfläche eingesetzt werden. Nach 3 Tagen beträgt die Wärmeleitfähigkeit des so erhaltenen Organopolysiloxanelastomeren 1,22 W/mK.

*Vergleichsversuch b)*

Die in Vergleichsversuch a) beschriebene Arbeitsweise wird wiederholt mit der Abänderung, dass anstelle der 30 Teile unbehandelten Siliciumcarbids mit einer Teilchengrösse von 0,1 bis 0,2 mm, 60 Teile des gleichen unbehandelten Siliciumcarbids eingesetzt werden. Nach 3 Tagen beträgt die Wärmeleitfähigkeit des so erhaltenen Organopolysiloxanelastomeren 0,91 W/mK.

*Beispiel 3*

Die in Beispiel 1 beschriebene Arbeitsweise wird wiederholt mit der Abänderung, dass anstelle der 30 Teile Siliciumcarbid mit einer Teilchengrösse von 0,1 bis 0,2 mm, das auf seiner Oberfläche SiC-gebundene Vinylgruppen aufweist, 30 Teile Siliciumcarbid mit einer Teilchengrösse von 0,2 bis 1 mm, das auf seiner Oberfläche SiC-gebundene Vinylgruppen aufweist, eingesetzt werden. Nach 3 Tagen beträgt die Wärmeleitfähigkeit des so erhaltenen Organopolysiloxanelastomeren 0,87 W/mK.

Das in diesem Beispiel verwendete Siliciumcarbid, das auf seiner Oberfläche SiC-gebundene Vinylgruppen aufweist, wurde durch Vermischen von 100 Teilen des eine Teilchengrösse von 0,1 bis 1 mm aufweisenden Siliciumcarbids mit 0,6 Teilen der 5prozentigen wässrigen Lösung von Vinyltriethoxysilan, Trocknen des so erhaltenen Gemisches während 2 Stunden bei 105°C und Absieben von Agglomeraten mit einer Teilchengrösse von über 1,5 mm hergestellt.

*Vergleichsversuch c)*

Die in Beispiel 3 beschriebene Arbeitsweise wird wiederholt mit der Abänderung, dass anstelle der 30 Teile Siliciumcarbid mit einer Teilchengrösse von 0,2 bis 1 mm und SiC-gebundenen Vinylgruppen auf der Oberfläche, 30 Teile Siliciumcarbid mit einer Teilchengrösse von 0,2 bis 1 mm, das nicht vorbehandelt war, eingesetzt werden. Nach 3 Tagen beträgt die Wärmeleitfähigkeit des so erhaltenen Organopolysiloxanelastomeren 0,70 W/mK.

**Patentansprüche**

1. Organopolysiloxanelastomer als wärmeleitender und elektrisch isolierender Bestandteil von elektrischen Vorrichtungen, dadurch gekennzeichnet, dass es Siliciumcarbid, das vor der Vernetzung auf seiner Oberfläche Organosilylgruppen aufweist, in Mengen von 20 bis 150 Gewichtsprozent, bezogen auf das Gesamtgewicht der übrigen Bestandteile des Elastomeren, enthält.

2. Organopolysiloxanelastomer nach Anspruch 1, dadurch gekennzeichnet, dass das Siliciumcarbid zumindest vor der Vernetzung von Organopolysiloxan zum Elastomer SiC-gebundene Vinylgruppen aufweist.

**Claims**

1. Organopolysiloxane elastomer as a heat-conductive and electrically insulating component of electrical devices, characterised in that it contains from 20 to 150% by weight, calculated on the total weight of the other components of the elastomer, of silicon carbide which, before cross-linking, has organosilyl groups on its surface.

2. Organopolysiloxane elastomer according to claim 1, characterised in that, at least before cross-linking of the organopolysiloxane to form the elastomer, the silicon carbide has SiC-bonded vinyl groups.

## Revendications

1. Elastomère de type organopolysiloxane comme constituant, conducteur de la chaleur et isolant électrique, de dispositifs électriques, élastomère caractérisé en ce qu'il contient en des quantités de 20 à 150% en poids, par rapport au poids total des autres constituants de l'élastomère, du carbure de silicium qui, avant la réticulation, présente à sa surface des groupes organosilyles.

2. Elastomère de type polyorganosiloxane selon la revendication 1, caractérisé en ce qu'au moins avant la réticulation du polyorganosiloxane en élastomère, le carbure de silicium présente des groupes vinyles reliés à SiC.